(19) Europäisches Patentamt
European Patent Office
Office européen des brevets

(11) Veröffentlichungsnummer : **0 071 812**
**B1**

(12) # EUROPÄISCHE PATENTSCHRIFT

(45) Veröffentlichungstag der Patentschrift : **20.02.85**

(51) Int. Cl.[4] : **C 09 D 3/48**, C 08 L 33/04, B 05 D 3/02

(21) Anmeldenummer : **82106493.8**

(22) Anmeldetag : **19.07.82**

(54) **Pulverlacke.**

(30) Priorität : **01.08.81 DE 3130612**

(43) Veröffentlichungstag der Anmeldung : **16.02.83 Patentblatt 83/07**

(45) Bekanntmachung des Hinweises auf die Patenterteilung : **20.02.85 Patentblatt 85/08**

(84) Benannte Vertragsstaaten : **AT BE CH DE FR GB IT LI NL SE**

(56) Entgegenhaltungen : **DE-A- 2 225 958**

(73) Patentinhaber : **BASF Farben + Fasern Aktiengesellschaft**
**Am Neumarkt 30**
**D-2000 Hamburg 70 (DE)**

(72) Erfinder : **Geist, Michael, Dipl.-Chem.**
**Rubensstrasse 251**
**D-4400 Münster (DE)**

(74) Vertreter : **Habbel, Hans-Georg, Dipl.-Ing.**
**Postfach 3429 Am Kanonengraben 11**
**D-4400 Münster (DE)**

**EP 0 071 812 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Pulverlacke und deren Herstellung.

Unter dem Begriff Pulverlacke sollen im folgenden pigmentierte und unpigmentierte Überzugsmittel in fester, feinteiliger Form auf der Basis organischer Kunstharze verstanden werden. Derartige Pulverlacke können für das elektrostatische Pulversprühverfahren verwendet werden und mittels dieses Verfahrens auf meist metallische Substrate aufgebracht werden. Eine Aufbringung in Form einer wäßrigen Suspension (« Slurry ») sowie das EPC-Verfahren (« Electro-Powder-Coating »), bei dem ein geeignetes Bindemittel für das Elektrotauchverfahren als äußere Phase einer Pulversuspension dient, sind ebenfalls bekannt.

Unabhängig von der Art der Applikation wird das Pulver im Anschluß an diese durch Einbrennen zu einem auf dem Substrat haftenden Überzug gehärtet.

Aus der DE-PS 2 225 958 ist die Verwendung von Mischungen aus einem epoxidgruppenhaltigen Copolymerisat, einer Polycarbonsäure und/oder eines Polycarbonsäureanhydrids und einen blockierten Polyisocyanat als Bindemittel bei der Herstellung von für das elektrostatische Pulversprühverfahren geeigneten Pulverlacken bekannt.

Diese bekannte Bindemittelzusammensetzung weist jedoch bei der Verarbeitung zu einem gebrauchsfertigen Pulverlack einige Nachteile auf. Bindemittel für Pulverlacke sollen spröde, leicht pulverisierbare Harze darstellen, die als Pulver bei Temperaturen bis etwa 40 °C noch rieselfähig bleiben und nicht klumpen. Die Pulver sollen bei Temperaturen von 80 bis 120 °C nach der Applikation auf dem Substrat glatt verlaufen und bei Temperaturen ab 130 °C zu unlöslichen und unschmelzbaren Überzügen einbrennen. Insbesondere dürfen die Bindemittel für Pulverlacke im Bereich ihrer Verlaufstemperaturen nicht vorzeitig vernetzen, da sie im allgemeinen in der Schmelze bei Temperaturen um 100 °C mit Pigmenten, Katalysatoren und Verlaufsmitteln vermischt werden.

Die Herstellung der Bindemittel gemäß der DE-PS 2 225 958 durch Mischen der Komponenten erfolgt vorzugsweise in einer Mischschnecke bei Temperaturen von 80 bis 120 °C zusammen mit dem Einmischen der Pigmente, Verlaufsmittel und Katalysatoren. In diesem Zusammenhang wird in der genannten Patentschrift darauf hingewiesen, daß die Mischzeiten 1 bis 10 Minuten betragen sollen, da längeres Mischen zu einer Anvernetzung des Produktes führt. Dieses Anvernetzen oder Gelieren ist auf eine Reaktion der Epoxidgruppen mit den Polycarbonsäuren bzw. den Polycarbonsäureanhydriden zurückzuführen. Bei dieser Reaktion, durch die die Zahl der zur Vernetzung beim Einbrennen zur Verfügung stehenden Epoxidgruppen herabgesetzt wird, entstehen durch Öffnung der Epoxidringe Hydroxylgruppen, die ihrerseits leicht mit Isocyanatgruppen reagieren. Zur Vermeidung der letztgenannten Reaktion dürfen gemäß der DE-PS 2 225 958 als Isocyanatkomponente nur blockierte Polyisocyanate verwendet werden. Dies ist außerdem erforderlich, weil unblockierte Isocyanatgruppen auch mit den Polycarbonsäuren bzw. deren Anhydriden reagieren würden. Blockierte Isocyanatverbindungen weisen nun wiederum den Nachteil auf, daß beim Einbrennen der Überzüge das Blockierungsmittel freigesetzt wird und nachteilig entweder im Überzug verbleibt oder zu schädlichen Emissionen führt.

Zusammenfassend kann festgestellt werden, daß das bekannte Bindemittel einerseits eine sehr sorgfältige und damit aufwendige Überwachung der Verarbeitungsbedingungen erfordert, um eine Anvernetzung des Produktes zu vermeiden, und andererseits zwingend die Verwendung von blockierten Polyisocyanaten erfordert, was wegen der Freisetzung des Blockierungsmittels die o. g. Nachteile mit sich bringt.

Es ist Aufgabe der Erfindung, diese Nachteile des Standes der Technik zu vermeiden und Pulverlacke zu schaffen, die eine erhöhte Verarbeitungssicherheit durch Vermeidung der Gelierungsgefahr aufweisen und die als Isocyanatkomponente unblockierte Polyisocyanate enthalten können.

Überraschenderweise wurde nun gefunden, daß man zu Überzügen mit ausgezeichneten mechanisch- technologischen Eigenschaften und hervorragender Lösungsmittelbeständigkeit gelangt, wenn man Pulverlacke verwendet, die durch direkte Reaktion von Epoxidgruppen mit Isocyanatgruppen unter Bildung von Oxazolidinonringen beim Einbrennen vernetzen.

Die o. g. Aufgabe wird daher erfindungsgemäß gelöst durch einen Pulverlack bestehend aus

A) 55-98 Gew.-% eines Copolymerisats mit einer zahlenmittleren Molmasse von 1 000 bis 20 000 aus

a) 20-98 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung und

c) 0-35 Gew-% einer Vinylverbindung, wobei die Summe der Bestandteile a, b und c 100 % beträgt,

B) 2-45 Gew.-% eines Di- und/oder Polyisocyanats mit freien oder blockierten Isocyanatgruppen und gegebenenfalls

C) Pigmenten, Verlaufsmitteln und weiteren bekannten Hilfsstoffen, wobei die Summe der Komponenten A und B 100 % beträgt.

Eine vorteilhafte Ausgestaltung der Erfindung ist gegeben durch einen Pulverlack bestehend aus

A) 55-98 Gew.-% eines Copolymerisats mit einer zahlenmittleren Molmasse von 1 000 bis 20 000 aus

a) 20-98 Gew.-% Acrylsäure- und/oder Methacrylsäureester mit 1 bis 18 Kohlenstoffatomen im Alkylrest und

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung, wobei die Summe der Bestandteile a und b 100 % beträgt,

B) 2-45 Gew.-% eines Di- und/oder Polyisocyanats mit freien oder blockierten Isocyanatgruppen und gegebenenfalls

C) Pigmenten, Verlaufsmitteln und weiteren bekannten Hilfsstoffen, wobei die Summe der Komponenten A und B 100 % beträgt.

Eine weitere vorteilhafte Ausgestaltung der Erfindung ist gegeben durch einen Pulverlack bestehend aus

A) 55-98 Gew.-% eines Copolymerisats mit einer zahlenmittleren Molmasse von 1 000 bis 20 000 aus

a) 20-97,9 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung und

c) 0,1-35 Gew.-% einer Vinylverbindung, wobei die Summe der Bestandteile a, b und c 100 % beträgt,

B) 2-45 Gew.-% eines Di- und/oder Polyisocyanats mit freien oder blockierten Isocyanatgruppen und gegebenenfalls

C) Pigmenten, Verlaufsmitteln und weiteren bekannten Hilfsstoffen, wobei die Summe der Komponenten A und B 100 % beträgt.

Die als Komponente A der erfindungsgemäßen Pulverlacke einzusetzenden Copolymerisate sind an sich bekannt. Ihre Herstellung erfolgt nach dem bekannten Polymerisationsmethoden, nämlich der Substanz-, Lösungs-, Emulsions- oder Perlpolymerisation. Die verschiedenen Polymerisationsmethoden sind gut bekannt und sind z. B. beschrieben in : Houben-Weyl, Methoden der org. Chemie 4. Auflage, Band 14/1, S. 24 bis 556 (1961).

Bei der Lösungspolymerisation können Lösungsmittel wie Benzol, Toluol, Xylol, Aceton, Methylethylketon, Methylisobutylketon, Essigsäureethylester, iso-Propanol, n-Butanol, Dichlormethan, Chloroform, Tetrachlorkohlenstoff und andere eingesetzt werden.

Die Polymerisationen werden bei Temperaturen von 50 bis 170 °C durchgeführt. Die Polymerisationsreaktion wird mit den bekannten Polymerisationsinitiatoren, insbesondere mit Peroxiden und Azo-Verbindungen, gestartet. Solche Polymerisationsinitiatoren, aber auch Mischungen verschiedener Polymerisationsinitiatoren, werden in Mengen von 0,5 bis 5 Gew.-%, bezogen auf die Einwaage der Monomeren, eingesetzt.

Die Mitverwendung von Kettenüberträgern zur Regelung des Molekulargewichtes ist zweckmäßig. Diese werden in Mengen von 0,1 bis 5 Gew.-%, bezogen auf die Einwaage der Monomeren, zugegeben. Bei den Kettenüberträgern handelt es sich um Verbindungen, deren kettenregelnden Eigenschaften an sich bekannt sind. Beispielhaft seien erwähnt : Mercaptane wie Octylmercaptan, tert-Dodecylmercaptan, Laurylmercaptan oder Thioglykolsäureester wie Thioglykolsäurebutylester, -hexylester, -isooctylester oder chlorierte Verbindungen wie Dichlormethan, Trichlormethan und Tetrachlorkohlenstoff.

Bei den Copolymerisaten handelt es sich um solche aus Acrylsäure- und/oder Methacrylsäureestern, Acrylsäure- und/oder Methacrylsäureglycidylestern und/oder einer anderen, mindestens eine Epoxidgruppe tragenden, olefinisch ungesättigten, polymerisierbaren Verbindung und gegebenenfalls einer Vinylverbindung.

Bevorzugt werden folgende Acrylsäureester eingesetzt :

Acrylsäuremethylester
Acrylsäureethylester
Acrylsäure-n-propylester
Acrylsäure-iso-proylester
Acrylsäurebutylester
Acrylsäure-2-ethylhexylester
Acrylsäurecyclohexylester

Bevorzugt werden folgende Methacrylsäureester eingesetzt :

Methacrylsäuremethylester
Methacrylsäureethylester
Methacrylsäure-n-propylester
Methacrylsäureisopropylester
Methacrylsäure-n-butylester
Methacrylsäureisobutylester
Methacrylsäure2-ethylhexylester
Methacrylsäurecyclohexylester

Neben Acrylsäure und Methacrylsäureglycidylester können als Epoxidgruppen tragende Monomere

auch andere, mindestens eine Epoxidgruppe tragende, olefinisch ungesättigte polymerisierbare Verbindungen eingesetzt werden. Geeignet sind beispielsweise Umsetzungsprodukte aus äquimolaren Mengen Acryl- bzw. Methacrylsäure und Diepoxidverbindungen wie z. B. Neopentylglykoldiglycidylester. Auch Umsetzungsprodukte aus hydroxylgruppenhaltigen, polymerisierbaren Monomeren wie z. B. Hydroxyethylacrylat und Diepoxiden sind als Epoxidgruppen tragende Monomerkomponente zur Herstellung des Copolymerisats geeignet.

Als weitere copolymerisierbare Monomere können geeignete Vinylverbindungen wie z. B. Styrol, α-Methylstyrol, p-Chlorstyrol, Vinylacetat und dergleichen eingesetzt werden.

Für die Copolymerisate an sich und ihre Herstellung wird kein Schutz begehrt. Für ihre Eignung als Komponente A der erfindungsgemäßen Pulverlacke ist entscheidend, daß es sich um epoxidgruppenhaltige Acrylat-bzw. Methacrylatpolymerisate handelt. Diese können auch durch Einführung von Epoxidgruppen in ein hydroxylgruppenhaltiges Acrylat- bzw. Methacrylatpolymerisat durch Umsetzung mit einer Diepoxidverbindung hergestellt worden sein.

Werden die erfindungsgemäßen Bindemittel in Lösungspolymerisation hergestellt, so ist nach der Polymerisation das Lösungsmittel abzuziehen. Hierfür eignen sich Verdampferschnecken, die im Vakuum bei Temperaturen von 80 bis 180 °C das Bindemittel vom Lösungsmittel befreien. Jedoch kann hierfür auch jedes andere, geeignete Verfahren herangezogen werden, so zum Beispiel die Sprühtrocknung oder das Ausfällen der Polymeren aus der Lösung.

Die Polymerisation wird so geführt, daß das Zahlenmittel des Molekulargewichts im Bereich von 1 000 bis 20 000 liegt.

Die so hergestellten Copolymerisate können leicht zu einem Pulver mit einer Teilchengröße von ca. 25 bis 120 μm gemahlen werden und sind bei Temperaturen von 40 bis 50 °C blockfest.

Die als Komponente B eingesetzten Di- oder Polyisocyanate leiten sich z. B. von aliphatischen Polyisocyanaten wie Hexamethylendiisocyanat, 2,2,4-Trimethylhexamethylendiisocyanat, 1-Isocyanato-3,5-dimethyl-5-isocyanatomethylcyclohexan oder aromatischen Polyisocyanaten wie Diisocyanatotoluol, Diisocyanatodiphenylmethan ab. Sie sollen in fester Form vorliegen.

Die Di- oder Polyisocyanate werden vorteilhaft in unblockierter Form, d. h. mit freien Isocyanatgruppen eingesetzt. Sie können auch blockiert eingesetzt werden. In diesem Fall sind sie nach an sich bekannten Verfahren z. B. mit Phenol, o-Kresol, Oximen, ε-Caprolactam, C-H-aciden Verbindungen wie Acetylaceton zu blockieren.

Die erfindungsgemäßen Pulverlacke können als Komponente C Pigmente, Verlaufsmittel und weitere dem Fachmann bekannte Hilfsstoffe, wie z. B. Katalysatoren oder Stabilisatoren, enthalten.

Geeignete Katalysatoren für die Umsetzung der Epoxidgruppen mit den Isocyanatgruppen sind beispielsweise tertiäre Amine, wie

Trimethylamin, Triäthylamin,
Tetramethylbutandiamin und
Triäthylendiamin, sowie andere Amine, wie
Dimethylaminoäthanol,
Dimethylaminopentanol,
Tris-(dimethylaminoethyl)-phenol und
N-Methylmorpholin.

Außerdem können quarternäre Ammoniumsalze verwendet werden, wie

Cetyltrimethyl-ammoniumbromid,
Cetyltrimethyl-ammoniumchlorid,
Dodecyltrimethyl-ammoniumjodid,
Trimethyldocecyl-ammoniumchlorid,
Benzyldimethyltetradecyl-ammoniumchlorid,
Benzyldimethylpalmityl-ammoniumchlorid,
Allyldodecyltrimethyl-ammoniumbromid,
Benzyldimethylstearyl-ammoniumbromid,
Stearyltrimethyl-ammoniumchlorid und
Benzyldimethyl-tetradecyl-ammoniumacetat.

Außerdem eignen sich Imidazole, wie

2-Methylimidazol, 2-Äthylimidazol,
2-Undecylimidazol, 2-Heptadecylimidazol,
2-Methyl-4-äthylimidazol,
1-Butylimidazol, 1-Propyl-2-methylimidazol,
1-Benzyl-2-methylimidazol,
1-Cyanäthyl-2-methylimidazol,
1-Cyanäthyl-2-undecylimidazol,

1-Cyanäthyl-2-phenylimidazol,
1-(4,6-Diamino-s-triazinyl-2-äthyl)-2-methylimidazol,
1-(4,6-Diamino-s-triazinyl-2-äthyl)-2-äthylimidazol und
1-(4,6-Diamino-s-triazinyl-2-äthyl)-2-undecylimidazol.

Im allgemeinen wird der basische Katalysator, d. h. der die Heteroringbildung fördernde Katalysator in einer Menge von 0,01 bis 10 Gew.-%, bezogen auf das Gesamtgewicht von Polyepoxid und Polyisocyanat, zugesetzt.

Die Erfindung betrifft auch ein Verfahren zur Herstellung der Pulverlacke, das dadurch gekennzeichnet ist, daß die Komponenten

A) 55-98 Gew.-% eines Copolymerisats mit einer zahlenmittleren Molmasse von 1 000 bis 20 000 aus

a) 20-98 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung und

c) 0-35 Gew.-% einer Vinylverbindung, wobei die Summe der Bestandteile a, b und c 100 % beträgt,

B) 2-45 Gew.-% eines Di- und/oder Polyisocyanats mit freien oder blockierten Isocyanatgruppen und gegebenenfalls

C) Pigmente, Verlaufsmittel und weitere bekannte Hilfsstoffe, wobei die Summe der Komponenten A und B 100 % beträgt, miteinander gemischt werden, die erhaltene Mischung durch Extrudieren homogenisiert und nach dem Erkalten zu einem Pulver zerkleinert wird.

Eine vorteilhafte Ausgestaltung des erfindungsgemäßen Verfahrens ist dadurch gekennzeichnet, daß die Komponenten

A) 55-98 Gew.-% eines Copolymerisats mit einer zahlenmittleren Molmasse von 1 000 bis 20 000 aus

a) 55-98 Gew.-% Acrylsäure- und/oder Methacrylsäureester mit 1 bis 18 Kohlenstoffatomen im Alkylrest und

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung, wobei die Summe der Bestandteile a und b 100 % beträgt,

B) 2-45 Gew.-% eines Di- und/oder Polyisocyanats mit freien oder blockierten Isocyanatgruppen und gegebenenfalls

C) Pigmente, Verfaufsmittel und weitere bekannte Hilfsstoffe, wobei die Summe der Komponenten A und B 100 % beträgt, miteinander gemischt werden, die erhaltene Mischung durch Extrudieren homogenisiert und nach dem Erkalten zu einem Pulver zerkleinert wird.

Eine weitere vorteilhafte Ausgestaltung der Erfindung ist dadurch gekennzeichnet, daß die Komponenten

A) 55-98 Gew.-% eines Copolymerisats mit einer zahlenmittleren Molmasse von 1 000 bis 20 000 aus

a) 20-97,9 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung und

c) 0,1-35 Gew.-% einer Vinylverbindung, wobei die Summe der Bestandteile a, b und c 100 % beträgt,

B) 2-45 Gew.-% eines Di- und/oder Polyisocyanats mit freien oder blockierten Isocyanatgruppen und gegebenenfalls

C) Pigmente, Verlaufsmittel und weitere bekannte Hilfsstoffen, wobei die Summe der Komponenten A und B 100 % beträgt, miteinander gemischt werden, die erhaltene Mischung durch Extrudieren homogenisiert und nach dem Erkalten zu einem Pulver zerkleinert wird.

Die Homogenisierung erfolgt vorzugsweise in einem Extruder bei Temperaturen von 80 bis 120 °C. Anstelle eines Extruders kann auch ein Kneter eingesetzt werden, jedoch wird ein Extruder bevorzugt. Unter den beschriebenen Bedingungen erhält man eine homogene Mischung, die sich auch nach dem Abkühlen nicht mehr entmischt.

Die so gefertigten Mischungen sind spröde und können zu einem 25 bis 120 µm feinem Pulver gemahlen werden. Gegebenenfalls kann auch noch nach Korngröße gesichtet werden.

Die Erfindung betrifft auch die Verwendung von Mischungen aus

A) 55-98 Gew.-% eines Copolymerisats mit einer zahlenmittleren Molmasse von 1 000 bis 20 000 aus

a) 20-98 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung und

c) 0-35 Gew.-% einer Vinylverbindung, wobei die Summe der Bestandteile a, b und c 100 % beträgt, und

B) 2-45 Gew.-% eines Di- und/oder Polyisocyanats mit freien oder blockierten Isocyanatgruppen als Bindemittel bei der Herstellung von Pulverlacken.

Die Erfindung betrifft ferner die Verwendung von Mischungen aus

A) 55-98 Gew.-% eines Copolymerisats mit einer zahlenmittleren Molmasse von 1 000 bis 20 000 aus

a) 55-98 Gew.-% Acrylsäure- und/oder Methacrylsäureester mit 1 bis 18 Kohlenstoffatomen im Alkylrest und

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung, wobei die Summe der Bestandteile a und b 100 % beträgt, und

B) 2-45 Gew.-% eines Di- und/oder Polyisocyanats mit freien oder blockierten Isocyanatgruppen als Bindemittel bei der Herstellung von Pulverlacken.

Die Erfindung betrifft weiterhin die Verwendung von Mischungen aus

A) 55-98 Gew.-% eines Copolymerisats mit einer zahlenmittleren Molmasse von 1 000 bis 20 000 aus

a) 20-97,9 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung und

c) 0,1-35 Gew.-% einer Vinylverbindung, wobei die Summe der Bestandteile a, b und c 100 % beträgt, und

B) 2-45 Gew.-% eines Di- und/oder Polyisocyanats mit freien oder blockierten Isocyanatgruppen als Bindemittel bei der Herstellung von Pulverlacken.

Die Erfindung betrifft auch ein Verfahren zum Herstellen von Überzügen durch Aufbringen eines pulverförmigen Überzugsmittels auf ein Substrat, wobei das Überzugsmittel als Bindemittel zwei bei erhöhter Temperatur miteinander unter Vernetzung reagierende Komponenten enthält, und Einbrennen des auf dem Substrat abgelagerten Überzugsmittels zu einem fest haftenden Überzug, dadurch gekennzeichnet, daß das Bindemittel als Komponente

A) 55-98 Gew.-% eines Copolymerisats mit einer zahlenmittleren Molmasse von 1 000 bis 20 000 aus

a) 20-98 Gew.-% Acrylsäure- und/oder Methacrylsaüreester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung und

c) 0-35 Gew.-% einer Vinylverbindung, wobei die Summe der Bestandteile a, b und c 100 % beträgt, und als Komponente

B) 2-45 Gew.-% eines Di- und/oder Polyisocyanats mit freien oder blockierten Isocyanatgruppen, wobei die Summe der Komponenten A und B 100 % beträgt, enthält und beim Einbrennen die Epoxidgruppen der Komponente A mit den Isocyanatgruppen der Komponente B unter Bildung von Oxazolidinonringen umgesetzt werden.

Die Erfindung betrifft weiterhin ein Verfahren zum Herstellen von Überzügen durch Aufbringen eines pulverförmigen Überzugsmittels auf ein Substrat, wobei das Überzugsmittel als Bindemittel zwei bei erhöhter Temperatur miteinander unter Vernetzung reagierende Komponenten enthält, und Einbrennen des auf dem Substrat abgelagerten Überzugsmittels zu einem fest haftenden Überzug, dadurch gekennzeichnet, daß das Bindemittel als Komponente

A) 55-98 Gew.-% eines Copolymerisats mit einer zahlenmittleren Molmasse von 1 000 bis 20 000 aus

a) 55-98 Gew.-% Acrylsäure- und/oder Methacrylsäureester mit 1 bis 18 Kohlenstoffatomen im Alkylrest und

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung, wobei die Summe der Bestandteile a und b 100 % beträgt, und als Komponente

B) 2-45 Gew.-% eines Di- und/oder Polyisocyanats mit freien oder blockierten Isocyanatgruppen, wobei die Summe der Komponenten A) und B) 100 % beträgt, enthält und beim Einbrennen die Epoxidgruppen der Komponente A mit den Isocyanatgruppen der Komponente B unter Bildung von Oxazolidinonringen umgesetzt werden.

Die Erfindung betrifft ferner ein Verfahren zum Herstellen von Überzügen durch Aufbringen eines pulverförmigen Überzugsmittels auf ein Substrat, wobei das Überzugsmittel als Bindemittel zwei bei erhöhter Temperatur miteinander unter Vernetzung reagierende Komponenten enthält, und Einbrennen des auf dem Substrat abgelagerten Überzugsmittels zu einem fest haftenden Überzug, dadurch gekennzeichnet, daß das Bindemittel als Komponente.

A) 55-98 Gew.-% eines Copolymerisats mit einer zahlenmittleren Molmasse von 1 000 bis 20 000 aus

a) 20-97,9 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung und

c) 0,1-35 Gew.-% einer Vinylverbindung, wobei die Summe der Bestandteile a, b und c 100 % beträgt, und als Komponente

B) 2-45 Gew.-% eines Di- und/oder Polyisocyanats mit freien oder blockierten Isocyanatgruppen, wobei die Summe der Komponenten A und B 100 % beträgt, enthält und beim Einbrennen die Epoxidgruppen der Komponente A mit den Isocyanatgruppen der Komponente B unter Bildung von Oxazolidinonringen umgesetzt werden.

Das Aufbringen des Pulverlackes auf leitfähige Gegenstände, insbesondere Metall, erfolgt nach den bekannten Methoden des Pulversprühverfahrens. Der auf das Substrat aufgebrachte Pulverlack wird je nach dem mittleren Molekulargewicht 10 bis 30 Minuten bei 130 bis 210 °C, vorzugsweise bei 150 bis 190 °C, eingebrannt. Hierbei schmilzt der Pulverlack bei 80 bis 110 °C und verläuft zu einer porenfreien, glatten Oberfläche.

Beim Einbrennen erfolgt die Vernetzung durch Reaktion der Epoxidgruppen der Komponente A mit den Isocyanatgruppen der Komponente B. Die Reaktion läuft nach folgendem Schema ab :

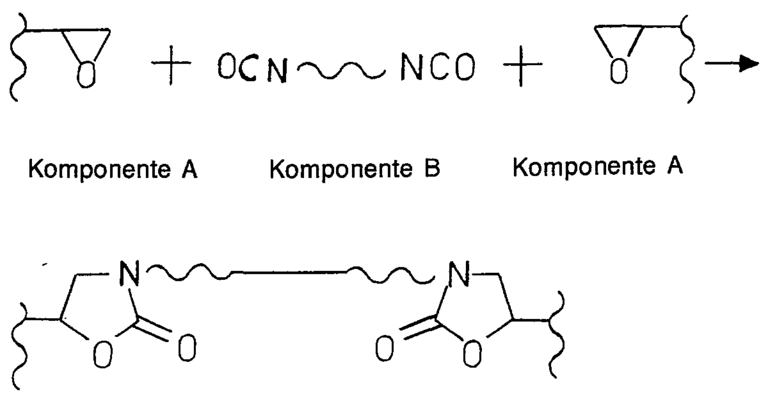

Komponente A Komponente B Komponente A

Die entstehenden Oxazolidinonringe werden in der Literatur oft auch als Oxazolidone bezeichnet.

Die Nutzbarmachung der beschriebenen Reaktion für die Vernetzung von Pulverlacken, deren Bindemittel ausschließlich aus einem Acrylatcopolymerisat und einem Di- oder Polyisocyanat besteht und die keine weiteren Vernetzungkomponente, wie z. B. Polycarbonsäuren, Polyanhydride oder Polyamine, benötigen, ist erfindungswesentlich.

Die mit dem erfindungsgemäßen Pulverlack hergestellten Filme zeichnen sich durch einen guten Verlauf, guten Glanz, hohe Härte bei gleichzeitiger Elastizität aus. Insbesondere sind die Witterungsbeständigkeit und Lösemittelfestigkeit ausgezeichnet.

Im folgenden wird die Erfindung anhand von Beispielen näher erläutert.

Herstellung der Komponente A, Harz 1

In einem 4-l-Kolben werden unter Stickstoff 400 g Toluol auf 100 °C erhitzt. Innerhalb von 4 Std. wird eine Mischung aus 1 000 g Methylmethacrylat, 400 g Glycidylmethacrylat, 300 g Ethylhexylmethacrylat, 300 g iso-Butylmethacrylat, 20 g Dodecylmercaptan und 100 g tert.-Butylperoctoat zugetropft. Der Ansatz wird bis zum Erreichen einer konstanten Viskosität von 1,4 dPa.s in 40 %iger Xylol-Lösung nachpolymerisiert. Danach wird im Vakuum bei 150 °C das Lösungsmittel abgezogen. Die erhaltene Schmelze wird auf ein Blech gegossen.

Nach dem Erkalten wird das Copolymerisatharz in einer Schlagkreuzmühle gemahlen.

Das zahlenmittlere Molekulargewicht, gemessen durch Gelpermationschromatographie, beträgt 1 800, das Epoxyäquivalentgewicht 771. Das Harz ist bei 50 °C bzw. 40 °C mindestens 24 h blockfest.

Herstellung der Komponente A, Harz 2

560 g Xylol werden unter Stickstoff in einem 5-l-Kolben vorgelegt und auf Rückflußtemperatur erhitzt. Innerhalb von 4,5 Std. wird die Monomermischung aus 1 400 g Methylmethacrylat, 560 g Glycidylmethacrylat und 840 g Ethylhexylmethacrylat mit 14 g Dodecylmercaptan zugetropft. Gleichzeitig wird 140 g tert.- Butylperoctoat zudosiert. Anschließend wird bis zum Erreichen einer konstanten Viskosität von 4,4 dPa.s, 50 %ig in Xylol, nachpolymerisiert. Das Harz wird, wie oben beschrieben, aufgearbeitet.

Das mittlere Molekulargewicht, gemessen durch Gelpermationschromatographie, beträgt 2 000, das Epoxyäquivalentgewicht 831.

Das Harz ist bei 50 °C über 5 Stunden und bei 40 °C über 24 Stunden blockfest.

Beispiel 1

Herstellung eines Pulverlackes I

100 g Harz 1 werden mit 17 g Hexamethylendiisocyanat im Kneter aufgeschmolzen, homogenisiert und dann auf kalte Bleche aufgetragen. Die Mischung wird in einer Schlagkreuzmühle zerkleinert und der Anteil zwischen 30 und 120 μm herausgesiebt.

Das erhaltene Pulver wird mit einem 100 μm Sieb auf Glasplatten in einer Schichtdicke von ca. 80 μm gesiebt. Die Platten werden 20 Min. bei 185 °C eingebrannt. Man erhält einen völlig porenfreien, gut verlaufenden, glänzenden Überzug.

Beispiel 2

Herstellung eines Pulverlackes II

100 g Harz 2 werden mit 55 g mit Acetylaceton blockiertem Hexamethylendiisocyanat, wie oben beschrieben, zu einem Pulver verarbeitet. Die mit dem Pulver beschichteten Platten werden 15 Min. bei 160 °C eingebrannt. Die Platten besitzen eine hochglänzende, porenfreie Oberfläche.

Beispiel 3

Herstellung eines Pulverlackes III

100 g Harz 1, 17 g Hexamethylendiisocyanat und 63 g Titandioxid (Rutil-Typ) werden wie in Beispiel 1 beschrieben, zu einem Pulver verarbeitet. Die hiermit beschichteten Platten weisen nach dem Einbrennen eine hochglänzende, reinweiße Beschichtung auf.

**Ansprüche**

1. Pulverlack bestehend aus

A) 55-98 Gew.-% eines Copolymerisats mit einer zahlenmittleren Molmasse von 1 000 bis 20 000 aus

a) 20-98 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung, und

c) 0-35 Gew-% einer Vinylverbindung, wobei die Summe der Bestandteile a, b und c 100 % beträgt,

B) 2-45 Gew.-% eines Di- und/oder Polyisocyanats mit freien oder blockierten Isocyanatgruppen und gegebenenfalls

C) Pigmenten, Verlaufsmitteln und weiteren bekannten Hilfsstoffen, wobei die Summe der Komponenten A und B 100 % beträgt.

2. Pulverlack bestehend aus

A) 55-98 Gew.-% eines copolymerisats mit einer zahlenmittleren Molmasse von 1 000 bis 20 000 aus

a) 55-98 Gew.-% Acrylsäure- und/oder Methacrylsäureester mit 1 bis 18 Kohlenstoffatomen im Alkylrest und

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung, wobei die Summe der Bestandteile a und b 100 % beträgt

B) 2-45 Gew.-% eines Di- und/oder Polyisocyanats mit freien oder blockierten Isocyanatgruppen und gegebenenfalls

C) Pigmenten, Verlaufsmitteln und weiteren bekannten Hilfsstoffen, wobei die Summe der Komponenten A und B 100 % beträgt.

3. Pulverlack bestehend aus

A) 55-98 Gew.-% eines Copolymerisats mit einer zahlenmittleren Molmasse von 1 000 bis 20 000 aus

a) 20-97,9 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung, und

c) 0,1-35 Gew.-% einer Vinylverbindung, wobei die Summe der Bestandteile a, b und c 100 % beträgt,

B) 2-45 Gew.-% eines Di- und/oder Polyisocyanats mit freien oder blockierten Isocyanatgruppen und gegebenenfalls

C) Pigmenten, Verlaufsmitteln und weiteren bekannten Hilfsstoffen, wobei die Summe der Komponenten A und B 100 % beträgt.

4. Verfahren zur Herstellung von Pulverlacken gemäß Anspruch 1, dadurch gekennzeichnet, daß die Komponenten

A) 55-98 Gew.-% eines Copolymerisats mit einer zahlenmittleren Molmasse von 1 000 bis 20 000 aus

a) 20-98 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung und

c) 0-35 Gew.-% einer Vinylverbindung, wobei die Summe der Bestandteile a, b und c 100 % beträgt,

B) 2-45 Gew.-% eines Di- und/oder Polyisocyanats mit freien oder blockierten Isocyanatgruppen und gegebenenfalls

C) Pigmente, Verlaufsmittel und weitere bekannte Hilfsstoffe, wobei die Summe der Komponenten

A und B 100 % beträgt, miteinander gemischt werden, die erhaltene Mischung durch Extrudieren homogenisiert und nach dem Erkalten zu einem Pulver zerkleinert wird.

5. Verfahren zur Herstellung von Pulverlacken gemäß Anspruch 2, dadurch gekennzeichnet, daß die Komponenten

A) 55-98 Gew.-% eines Copolymerisats mit einer zahlenmittleren Molmasse von 1 000 bis 20 000 aus

a) 55-98 Gew.-% Acrylsäure- und/oder Methacrylsäureester mit 1 bis 18 Kohlenstoffatomen im Alkylrest und

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung, wobei die Summe der Bestandteile a und b 100 % beträgt,

B) 2-45 Gew.-% eines Di- und/oder Polyisocyanats mit freien oder blockierten Isocyanatgruppen und gegebenenfalls

C) Pigmente, Verlaufsmittel und weitere bekannte Hilfsstoffe, wobei die Summe der Komponenten A und B 100 % beträgt, miteinander gemischt werden, die erhaltenen Mischung durch Extrudieren homogenisiert und nach dem Erkalten zu einem Pulver zerkleinert wird.

6. Verfahren zur Herstellung von Pulverlacken gemäß Anspruch 3, dadurch gekennzeichnet, daß die Komponenten

A) 55-98 Gew.-% eines Copolymerisats mit einer zahlenmittleren Molmasse von 1 000 bis 20 000 aus

a) 20-97,9 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragende, olefinisch ungesättigten, polymerisierbaren Verbindung und

c) 0,1-35 Gew.-% einer Vinylverbindung, wobei die Summe der Bestandteile a, b und c 100 % beträgt,

B) 2-45 Gew.-% eines Di- und/oder Polyisocyanats mit freien oder blockierten Isocyanatgruppen und gegebenenfalls

C) Pigmente, Verlaufsmittel und weitere bekannte Hilfsstoffe, wobei die Summe der Komponenten A und B 100 % beträgt, miteinander gemischt werden, die erhaltene Mischung durch Extrudieren homogenisiert und nach dem Erkalten zu einem Pulver zerkleinert wird.

7. Verwendung von Mischungen aus

A) 55-98 Gew.-% eines Copolymerisats mit einer zahlenmittleren Molmasse von 1 000 bis 20 000 aus

a) 20-98 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung und

c) 0-35 Gew.-% einer Vinylverbindung, wobei die Summe der Bestandteile a, b und c 100 % beträgt, und

B) 2-45 Gew.-% eines Di- und/oder Polyisocyanats mit freien oder blockierten Isocyanatgruppen als Bindemittel bei der Herstellung von Pulverlacken, wobei die Summe der Komponenten A und B 100 % beträgt.

8. Verwendung von Mischungen aus

A) 55-98 Gew.-% eines Copolymerisats mit einer zahlenmittleren Molmasse von 1 000 bis 20 000 aus

a) 55-98 Gew.-% Acrylsäure- und/oder Methacrylsäureester mit 1 bis 18 Kohlenstoffatomen im Alkylrest und

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung, wobei die Summe der Bestandteile a und b 100 % beträgt, und

B) 2-45 Gew.-% eines Di- und/oder Polyisocyanats mit freien oder blockierten Isocyanatgruppen als Bindemittel bei der Herstellung von Pulverlacken, wobei die Summe der Komponenten A und B 100 % beträgt.

9. Verwendung von Mischungen aus

A) 55-98 Gew.-% eines Copolymerisats mit einer zahlenmittleren Molmasse von 1 000 bis 20 000 aus

a) 20-97,9 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung und

c) 0,1-35 Gew.-% einer Vinylverbindung, wobei die Summe der Bestandteile a, b und c 100 % beträgt, und

B) 2-45 Gew.-% eines Di- und/oder Polyisocyanats mit freien oder blockierten Isocyanatgruppen als Bindemittel bei der Herstellung von Pulverlacken, wobei die Summe der Komponenten A und B 100 % beträgt.

10. Verfahren zum Herstellen von Überzügen durch Aufbringen eines pulverförmigen Überzugsmittels auf ein Substrat, wobei das Überzugsmittel als Bindemittel zwei bei erhöhter Temperatur miteinander unter Vernetzung reagierende Komponenten enthält, und Einbrennen des auf dem Substrat abgelagerten Überzugsmittels zu einem fest haftenden Überzug, dadurch gekennzeichnet, daß das

Bindemittel als Komponente

A) 55-98 Gew.-% eines Copolymerisats mit einer zahlenmittleren Molmasse von 1 000 bis 20 000 aus

a) 20-98 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung und

c) 0-35 Gew.-% einer Vinylverbindung, wobei die Summe der Bestandteile a, b und c 100 % beträgt, und als Komponente

B) 2-45 Gew.-% eines Di- und/oder Polyisocyanats mit freien oder blockierten Isocyanatgruppen, wobei die Summe der Komponenten A und B 100 % beträgt, enthält und beim Einbrennen die Epoxidgruppen der Komponente A mit den Isocyanatgruppen der Komponente B unter Bildung von Oxazolidinonringen umgesetzt werden.

11. Verfahren zum Herstellung von Überzügen durch Aufbringen eines pulverförmigen Überzugsmittels auf ein Substrat, wobei das Überzugsmittel als Bindemittel zwei bei erhöhter Temperatur miteinander unter Vernetzung reagierende Komponenten enthält, und Einbrennen des auf dem Substrat abgelagerten Überzugsmittels zu einem fest haftenden Überzug, dadurch gekennzeichnet, daß das Bindemittel als Komponente

A) 55-98 Gew.-% eines Copolymerisats mit einer zahlenmittleren Molmasse von 1 000 bis 20 000 aus

a) 55-98 Gew.-% Acrylsäure- und/oder Methacrylsäureester mit 1 bis 18 Kohlenstoffatomen im Alkylrest und

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung, wobei die Summe der Bestandteile a und b 100 % beträgt, und als Komponente

B) 2-45 Gew.-% eines Di- und/oder Polyisocyanats mit freien oder blockierten Isocyanatgruppen, wobei die Summe der Komponenten A und B 100 % beträgt, enthält und beim Einbrennen die Epoxidgruppen der Komponente A mit den Isocyanatgruppen der Komponente B unter Bildung von Oxazolidinonringen umgesetzt werden.

12. Verfahren zum Herstellen von Überzügen durch Aufbringen eines pulverförmigen Überzugsmittels auf ein Substrat, wobei das Überzugsmittel als Bindemittel zwei bei erhöhter Temperatur miteinander unter Vernetzung reagierende Komponenten enthält, und Einbrennen des auf dem Substrat abgelagerten Überzugsmittels zu einem fest haftenden Überzug, dadurch gekennzeichnet, daß das Bindemittel als Komponente

A) 55-98 Gew.-% eines Copolymerisats mit einer zahlenmittleren Molmasse von 1 000 bis 20 000 aus

a) 20-97,9 Gew.-% Acrylsäure- und/oder Methacrylsäureester mit 1 bis 18 Kohlenstoffatomen im Alkylrest,

b) 2-45 Gew.-% Acrylsäure- und/oder Methacrylsäureglycidylester und/oder einer anderen, mindestens eine Epoxidgruppe tragenden, olefinisch ungesättigten, polymerisierbaren Verbindung und

c) 0,1-35 Gew.-% einer Vinylverbindung, wobei die Summe der Bestandteile a, b und c 100 % beträgt, und als Komponente

B) 2-45 Gew.-% eines Di- und/oder Polyisocyanats mit freien oder blockierten Isocyanatgruppen, wobei die Summe der Komponenten A und B 100 % beträgt, enthält und beim Einbrennen die Epoxidgruppen der Komponente A mit den Isocyanatgruppen der Komponente B unter Bildung von Oxazolidinonringen umgesetzt werden.

## Claims

1. A powder finish comprising

A) 55-98 % by weight of a copolymer having a number average molecular weight of 1,000 to 20,000 of

a) 20-98 % by weight of acrylate and/or methacrylate having 1 to 18 carbon atoms in the alkyl radical,

b) 2-45 % by weight of glycidyl acrylate and/or methacrylate and/or one other olefinically unsaturated, polymerizable compound carrying at least one epoxide group and

c) 0-35 % by weight of a vinyl compound, the total amount of constituents a, b and c being 100 %,

B) 2-45 % by weight of a diisocyanate and/or polyisocyanate having free or blocked isocyanate groups and, if appropriate,

C) pigments, leveling agents and other known auxiliaries, the total amount of components A and B being 100 %.

2. A powder finish comprising

A) 55-98 % by weight of a copolymer having a number average molecular weight of 1,000 to 20,000 of

a) 20-98 % by weight of acrylate and/or methacrylate having 1 to 18 carbon atoms in the alkyl radical, and

b) 2-45 % by weight of glycidyl acrylate and/or methacrylate and/or one other olefinically

unsaturated, polymerizable compound carrying at least one epoxide group, the total amount of constituents a and b being 100 %,

B) 2-45 % by weight of a diisocyanate and/or polyisocyanate having free or blocked isocyanate groups and, if appropriate,

C) pigments, leveling agents and other known auxiliaries, the total amount of components A and B being 100 %.

3. A powder finish comprising

A) 55-98 % by weight of a copolymer having a number average molecular weight of 1,000 to 20,000 of

a) 20-97.9 % by weight of acrylate and/or methacrylate having 1 to 18 carbon atoms in the alkyl radical,

b) 2-45 % by weight of glycidyl acrylate and/or methacrylate and/or one other olefinically unsaturated, polymerizable compound carrying at least one epoxide group and

c) 0.1-35 % by weight of a vinyl compound, the total amount of constituents a, b and c being 100 %,

B) 2-45 % by weight of a diisocyanate and/or polyisocyanate having free or blocked isocyanate groups and, if appropriate,

C) pigments, leveling agents and other known auxiliaries, the total amount of components A and B being 100 %.

4. A process for preparing a powder finish as claimed in claim 1, which comprises mixing the components

A) 55-98 % by weight of a copolymer having a number average molecular weight of 1,000 to 20,000 of

a) 20-98 % by weight of acrylate and/or methacrylate having 1 to 18 carbon atoms in the alkyl radical,

b) 2-45 % by weight of glycidyl acrylate and/or methacrylate and/or one other olefinically unsaturated, polymerizable compound carrying at least one epoxide group and

c) 0-35 % by weight of a vinyl compound, the total amount of constituents a, b and c being 100 %,

B) 2-45 % by weight of a diisocyanate and/or polyisocyanate having free or blocked isocyanate groups and, if appropriate,

C) pigments, leveling agents and other known auxiliaries, the total amount of components A and B being 100 %, with one another, homogenizing the mixture obtained by extruding it and comminuting the extruded mixture after it has cooled down into a powder.

5. A process for preparing a powder finish as claimed in claim 2, which comprises mixing the components

A) 55-98 % by weight of a copolymer having a number average molecular weight of 1,000 to 20,000 of

a) 55-98 % by weight of acrylate and/or methacrylate having 1 to 18 carbon atoms in the alkyl radical, and

b) 2-45 % by weight of glycidyl acrylate and/or methacrylate and/or one other olefinically unsaturated, polymerizable compound carrying at least one epoxide group, the total amount of constituents a and b being 100 %,

B) 2-45 % by weight of a diisocyanate and/or polyisocyanate having free or blocked isocyanate groups and, if appropriate,

C) pigments, leveling agents and other known auxiliaries, the total amount of components A and B being 100 %, with one another, homogenizing the mixture obtained by extruding it and comminuting the extruded mixture after it has cooled down into a powder.

6. A process for preparing a powder finish as claimed in claim 3, which comprises mixing the components

A) 55-98 % by weight of a copolymer having a number average molecular weight of 1,000 to 20,000 of

a) 20-97.9 % by weight of acrylate and/or methacrylate having 1 to 18 carbon atoms in the alkyl radical,

b) 2-45 % by weight of glycidyl acrylate and/or methacrylate and/or one other olefinically unsaturated, polymerizable compound carrying at least one epoxide group and

c) 0.1-35 % by weight of a vinyl compound, the total amount of constituents a, b and c being 100 %,

B) 2-45 % by weight of a diisocyanate and/or polyisocyanate having free or blocked isocyanate groups and, if appropriate,

C) pigments, leveling agents and other known auxiliaries, the total amount of components A and B being 100 %, with one another, homogenizing the mixture obtained by extruding it and comminuting the extruded mixture after it has cooled down into a powder.

7. The use of mixtures of

A) 55-98 % by weight of a copolymer having a number average molecular weight of 1,000 to 20,000 of

a) 20-98 % by weight of acrylate and/or methacrylate having 1 to 18 carbon atoms in the alkyl radical,

b) 2-45 % by weight of glycidyl acrylate and/or methacrylate and/or one other olefinically unsaturated, polymerizable compound carrying at least one epoxide group and

c) 0-35 % by weight of a vinyl compound, the total amount of constituents a, b and c being 100 %, and

B) 2-45 % by weight of a diisocyanate and/or polyisocyanate having free or blocked isocyanate groups, as binders in the preparation of powder finishes, the total amount of components A and B being 100 %.

8. The use of mixtures of

A) 55-98 % by weight of a copolymer having a number average molecular weight of 1,000 to 20,000 of

a) 55-98 % by weight of acrylate and/or methacrylate having 1 to 18 carbon atoms in the alkyl radical and

b) 2-45 % by weight of glycidyl acrylate and/or methacrylate and/or one other olefinically unsaturated, polymerizable compound carrying at least one epoxide gorup, the total amount of constituents a and b being 100 %, and

B) 2-45 % by weight of a diisocyanate and/or polyisocyanate having free or blocked isocyanate groups, as binders in the preparation of powder finishes, the total amount of components A and B being 100 %.

9. The use of mixtures of

A) 55-98 % by weight of a copolymer having a number average molecular weight of 1,000 to 20,000 of

a) 20-97.9 % by weight of acrylate and/or methacrylate having 1 to 18 carbon atoms in the alkyl radical,

b) 2-45 % by weight of glycidyl acrylate and/or methacrylate and/or one other olefinically unsaturated, polymerizable compound carrying at least one epoxide group and

c) 0.1-35 % by weight of a vinyl compound, the total amount of constituents a, b and c being 100 %, and

B) 2-45 % by weight of a diisocyanate and/or polyisocyanate having free or blocked isocyanate groups, as binders in the preparation of powder finishes, the total amount of components A and B being 100 %.

10. A process for preparing surface coatings by applying a pulverulent coating agent to a substrate, the coating agent containing as a binder two components which react with each other at elevated temperature and crosslink, and baking the coating agent deposited on the substrate to give a firmly adhering surface coating, wherein the binder contains as component

A) 55-98 % by weight of a copolymer having a number average molecular weight of 1,000 to 20,000 of

a) 20-98 % by weight of acrylate and/or methacrylate having 1 to 18 carbon atoms in the alkyl radical,

b) 2-45 % by weight of glycidyl acrylate and/or methacrylate and/or one other olefinically unsaturated, polymerizable compound carrying at least one epoxide group and

c) 0-35 % by weight of a vinyl compound, the total amount of constituents a, b and c being 100 %, and as component

B) 2-45 % by weight of a diisocyanate and/or polyisocyanate having free or blocked isocyanate groups, the total amount of components A and B being 100 %, and, on baking, the epoxide groups of component A react with the isocyanate groups of component B to form oxazolidinone rings.

11. A process for preparing surface coatings by applying a pulverulent coating agent to a substrate, the coating agent containing as a binder two components which react with each other at elevated temperature and crosslink, and baking the coating agent deposited on the substrate to give a firmly adhering surface coating, wherein the binder contains as component

A) 55-98 % by weight of a copolymer having a number average molecular weight of 1,000 to 20,000 of

a) 55-98 % by weight of acrylate and/or methacrylate having 1 to 18 carbon atoms in the alkyl radical and

b) 2-45 % by weight of glycidyl acrylate and/or methacrylate and/or one other olefinically unsaturated, polymerizable compound carrying at least one epoxide group, the total amount of constituents a and b being 100 %, and as component

B) 2-45 % by weight of a diisocyanate and/or polyisocyanate having free or blocked isocyanate groups, the total amount of components A and B being 100 %, and, on baking, the epoxide groups of component A react with the isocyanate groups of component B and form oxazolidinone rings.

12. A process for preparing surface coatings by applying a pulverulent coating agent to a substrate, the coating agent containing as a binder two components which react with each other at elevated temperature and cross-link, and baking the coating agent deposited on the substrate to give a firmly adhering surface coating, wherein the binder contains as component

A) 55-98 % by weight of a copolymer having a number average molecular weight of 1,000 to 20,000 of

a) 20-97.9 % by weight of acrylate and/or methacrylate having 1 to 18 carbon atoms in the alkyl radical,

b) 2-45 % by weight of glycidyl acrylate and/or methacrylate and/or one other olefinically unsaturated, polymerizable compound carrying at least one epoxide group and

c) 0.1-35 % by weight of a vinyl compound, the total amount of constituents a, b, and c being 100 %, and as component

B) 2-45 % by weight of a diisocyanate and/or polyisocyanate having free or blocked isocyanate groups, the total amount of components A and B being 100 %, and, on baking, the epoxide groups of component A react with the isocyanate groups of component B to form oxazolidinone rings.

**Revendications**

1. Peinture en poudre comprenant :

A) 55 à 98 % en poids d'un produit de copolymérisation ayant une masse moléculaire moyenne en nombre de 1 000 à 20 000, formé de :

a) 20 à 98 % en poids d'ester d'acide acrylique et/ou méthacrylique contenant 1 à 18 atomes de carbone dans le radical alkyle,

b) 2 à 45 % en poids d'ester de glycidyle d'acide acrylique et/ou méthacrylique et/ou d'un autre composé polymérisable à insaturation oléfinique portant au moins un groupe époxyde et

c) 0 à 35 % en poids d'un composé vinylique, la somme des constituants a, b et c étant de 100 %,

B) 2 à 45 % en poids d'un diisocyanate et/ou polyisocyanate contenant des groupes isocyanate libres ou bloqués et éventuellement :

C) des pigments, des agents d'étalement et d'autres adjuvants connus, la somme des constituants A et B étant de 100 %.

2. Peinture en poudre comprenant :

A) 55 à 98 % en poids d'un produit de copolymérisation ayant une masse moléculaire moyenne en nombre de 1 000 à 20 000, formé de

a) 55 à 98 % en poids d'ester d'acide acrylique et/ou méthacrylique contenant 1 à 18 atomes de carbone dans le radical alkyle,

b) 2 à 45 % en poids d'ester de glycidyle d'acide acrylique et/ou méthacrylique et/ou d'un autre composé polymérisable à insaturation oléfinique portant au moins un groupe époxyde, la somme des constituants a et b étant de 100 %,

B) 2 à 45 % en poids d'un diisocyanate et/ou polyisocyanate contenant des groupes isocyanate libres ou bloqués et éventuellement

C) des pigments, des agents d'étalement et d'autres adjuvants connus, la somme des constituants A et B étant de 100 %.

3. Peinture en poudre comprenant :

A) 55 à 98 % en poids d'un produit de copolymérisation ayant une masse moléculaire moyenne en nombre de 1 000 à 20 000, formé de :

a) 20 à 97,9 % en poids d'ester d'acide acrylique et/ou méthacrylique contenant 1 à 18 atomes de carbone dans le radical alkyle,

b) 2 à 45 % en poids d'ester de glycidyle d'acide acrylique et/ou méthacrylique et/ou d'un autre composé polymérisable à insaturation oléfinique portant au moins un groupe époxyde, et

c) 0,1 à 35 % en poids d'un composé vinylique, la somme des constituants a, b et c étant de 100 %.

B) 2 à 45 % en poids d'un diisocyanate et/ou polyisocyanate contenant des groupes isocyanates libres ou bloqués, et éventuellement

C) des pigments, agents d'étalement et autres adjuvants connus, la somme des constituants A et B étant de 100 %.

4. Procédé de fabrication de peintures en poudre selon la revendication 1, caractérisé par le fait que l'on mélange entre eux les constituants, à savoir :

A) 55 à 98 en poids d'un produit de copolymérisation ayant une masse moléculaire moyenne en nombre de 1 000 à 20 000, formé de :

a) 20 à 98 % en poids d'ester d'acide acrylique et/ou méthacrylique contenant 1 à 18 atomes de carbone dans le radical alkyle,

b) 2 à 45 % en poids d'ester de glycidyle d'acide acrylique et/ou méthacrylique et/ou d'un autre composé polymérisable à insaturation oléfinique portant au moins un groupe époxyde, et

c) 0 à 35 % en poids d'un composé vinylique, la somme des constituants a, b et c étant de 100 %,

B) 2 à 45 % en poids d'un diisocyanate et/ou polyisocyanate contenant des groupes isocyanate libres ou bloqués et éventuellement :

C) des pigments, agents d'étalement et autres adjuvants connus, la somme des constituants A et B étant de 100 %, que l'on homogénéise par extrusion le mélange obtenu et qu'après le refroidissement, on le divise en une poudre.

5. Procédé de fabrication de peintures en poudre selon la revendication 2, caractérisé par le fait que l'on mélange entre eux les constituants, à savoir :

A) 55 à 98 % d'un produit de copolymérisation ayant une masse moléculaire moyenne en nombre de 1 000 à 20 000, formé de :

a) 55 à 98 % en poids d'ester d'acide acrylique et/ou méthacrylique contenant 1 à 18 atomes de carbone dans le radical alkyle, et

b) 2 à 45 % en poids d'ester de glycidyle d'acide acrylique et/ou méthacrylique et/ou d'un autre composé polymérisable à insaturation oléfinique portant au moins un groupe époxyde, la somme des constituants a et b étant de 100 %,

B) 2 à 45 % en poids d'un diisocyanate et/ou polyisocyanate contenant des groupes isocyanate libres ou bloqués, et éventuellement

C) des pigments, agents d'étalement et autres adjuvants connus, la somme des constituants A et B étant de 100 %, que l'on homogénéise par extrusion le mélange obtenu et qu'après le refroidissement, on le divise en une poudre.

6. Procédé de fabrication de peintures en poudre selon la revendication 3, caractérisé par le fait que l'on mélange entre eux les constituants, à savoir :

A) 55 à 98 % en poids d'un produit de copolymérisation ayant une masse moléculaire moyenne en nombre de 1 000 à 20 000, formé de :

a) 20 à 97,9 % en poids d'ester d'acide acrylique et/ou méthacrylique contenant 1 à 18 atomes de carbone dans le radical alkyle,

b) 2 à 45 % en poids d'ester de glycidyle d'acide acrylique et/ou méthacrylique et/ou d'un autre composé polymérisable à insaturation oléfinique portant au moins un groupe époxyde, et

c) 0,1 à 35 % en poids d'un composé vinylique, la somme des constituants a, b et c étant de 100 %,

B) 2 à 45 % en poids d'un diisocyanate et/ou polyisocyanate contenant des groupes isocyanate libres ou bloqués et éventuellement

C) des pigments, agents d'étalement et autres adjuvants connus, la somme des constituants A et B étant de 100 %, que l'on homogénéise par extrusion le mélange obtenu et qu'après le refroidissement, on le divise en une poudre.

7. Utilisation de mélanges comprenant :

A) 55 à 98 % en poids d'un produit de copolymérisation ayant une masse moléculaire moyenne en nombre de 1 000 à 20 000, formé de :

a) 20 à 98 % en poids d'un ester d'acide `rylique et/ou méthacrylique contenant 1 à 18 atomes de carbone dans le radical alkyle,

b) 2 à 45 % en poids d'ester de glycidyle d'acide acrylique et/ou méthacrylique et/ou d'un autre composé polymérisable à insaturation oléfinique portant au moins un groupe époxyde, et

c) 0 à 35 % en poids d'un composé vinylique, la somme des constituants a, b et c étant de 100 %, et

B) 2 à 45 % en poids d'un diisocyanate et/ou polyisocyanate contenant des groupes isocyanate libres ou bloqués, comme liant lors de la fabrication de peintures en poudre, la somme des constituants A et B étant de 100 %.

8. Utilisation de mélanges comprenant :

A) 55 à 98 % en poids d'un produit de copolymérisation ayant une masse moléculaire moyenne en nombre de 1 000 à 20 000, formé de :

a) 55 à 98 % en poids d'ester d'acide acrylique et/ou méthacrylique contenant 1 à 18 atomes de carbone dans le radical alkyle, et

b) 2 à 45 % en poids d'ester de glycidyle d'acide acrylique et/ou méthacrylique et/ou d'un autre composé polymérisable à insaturation oléfinique portant au moins un groupe époxyde, la somme des constituants a et b étant de 100 % et

B) 2 à 45 % en poids d'un diisocyanate et/ou polyisocyanate contenant des groupes isocyanate libres ou bloqués, comme liant lors de la fabrication de peintures en poudre, la somme des constituants A et B étant de 100 %.

9. Utilisation de mélanges comprenant :

A) 55 à 98 % d'un produit de copolymérisation ayant une masse moléculaire moyenne en nombre de 1 000 à 20 000, formé de

a) 20 à 97,9 % en poids d'ester d'acide acrylique et/ou méthacrylique contenant 1 à 18 atomes de carbone dans le radical alkyle,

b) 2 à 45 % en poids d'ester de glycidyle d'acide acrylique et/ou méthacrylique et/ou d'un autre composé polymérisable à insaturation oléfinique portant au moins un groupe époxyde, et

c) 0,1 à 35 % en poids d'un composé vinylique, la somme des constituants a, b et c étant de 100 %, et

B) 2 à 45 % en poids d'un diisocyanate et/ou polyisocyanate contenant des groupes isocyanate libres ou bloqués, comme liant lors de la fabrication de peintures en poudre, la somme des constituants A et B étant de 100 %.

10. Procédé de réalisation de revêtements par application d'un agent de revêtement pulvérulent sur un subjectile, l'agent de revêtement contenant comme liant deux constituants qui réagissent entre eux à température élevée avec réticulation, et par cuisson de l'agent de revêtement déposé sur le subjectile avec formation d'un revêtement adhérant fermement, caractérisé par le fait que le liant contient comme constituant :

A) 55 à 98 % d'un produit de copolymérisation ayant une masse moléculaire moyenne en nombre de 1 000 à 20 000, formé de :

a) 20 à 98 % en poids d'ester d'acide acrylique et/ou méthacrylique contenant 1 à 18 atomes de carbone dans le radical alkyle,

b) 2 à 45 % en poids d'ester de glycidyle d'acide acrylique et/ou méthacrylique et/ou d'un autre composé polymérisable à insaturation oléfinique portant au moins un groupe époxyde, et

c) 0 à 35 % en poids d'un composé vinylique, la somme des constituants a, b et c étant de 100 %, et comme constituant :

B) 2 à 45 % en poids d'un diisocyanate et/ou polyisocyanate contenant des groupes isocyanate libres ou bloqués, la somme des constituants A et B étant de 100 %, et que lors de la cuisson, on fait réagir les groupes époxyde du constituant A sur les groupes isocyanate du constituant B, avec formation de noyaux oxazolidinone.

11. Procédé de réalisation de revêtements par application d'un agent de revêtement pulvérulent sur un subjectile, l'agent de revêtement contenant comme liant deux constituants qui réagissent entre eux à température élevée avec réticulation, et par cuisson de l'agent de revêtement déposé sur le subjectile avec formation d'un revêtement adhérant fermement, caractérisé par le fait que le liant contient, comme constituant :

A) 55 à 98 % en poids d'un produit de copolymérisation ayant une masse moléculaire moyenne en nombre de 1 000 à 20 000, formé de :

a) 55 à 98 % en poids d'ester d'acide acrylique et/ou méthacrylique contenant 1 à 18 atomes de carbone dans le radical alkyle, et

b) 2 à 45 % en poids d'ester de glycidyle d'acide acrylique et/ou méthacrylique et/ou d'un autre composé polymérisable à insaturation oléfinique portant au moins un groupe époxyde, la somme des constituants a et b étant de 100 %, et comme constituant :

B) 2 à 45 % en poids d'un diisocyanate ou polyisocyanate contenant des groupes isocyanate libres ou bloqués, la somme des constituants A et B étant de 100 %, et que lors de la cuisson, on fait réagir les groupes époxyde du constituant A sur les groupes isocyanate du constituant B, avec formation de noyaux oxazolidinone.

12. Procédé de réalisation de revêtement par application d'un agent de revêtement pulvérulent sur un subjectile, l'agent de revêtement contenant comme liant deux constituants qui réagissent entre eux à température élevée avec réticulation, et par cuisson de l'agent de revêtement déposé sur le subjectile avec formation d'un revêtement adhérant fermement, caractérisé par le fait que le liant contient comme constituant :

A) 55 à 98 % en poids d'un produit de copolymérisation ayant une masse moléculaire moyenne en nombre de 1 000 à 20 000, formé de :

a) 20 à 97,9 % en poids d'ester d'acide acrylique et/ou méthacrylique contenant 1 à 18 atomes de carbone dans le radical alkyle,

b) 2 à 45 % en poids d'ester de glycidyle d'acide acrylique et/ou méthacrylique et/ou d'un autre composé polymérisable à insaturation oléfinique portant au moins un groupe époxyde, et

c) 0,1 à 35 % en poids d'un composé vinylique, la somme des constituants a, b et c étant de 100 %, et comme constituant :

B) 2 à 45 % en poids d'un diisocyanate et/ou polyisocyanate contenant des groupes isocyanate libres ou bloqués, la somme des constituants A et B étant de 100 %, et que lors de la cuisson, on fait réagir les groupes époxyde du constituant A sur les groupes isocyanate du constituant B avec formation de noyaux oxazolidinone.